# EUROPEAN PATENT APPLICATION

(11) **EP 4 368 451 A1**
(43) Date of publication of application: **15.05.2024**
(21) Application number: 23209372.4
(22) Date of filing: 13.11.2023
(51) Int. Cl.: B60Q 1/30, B60Q 9/00, G01S 7/00, G01S 7/40, G01S 7/497, G01S 7/52, G01S 13/86, G01S 13/87, G01S 13/931, G01S 15/86, G01S 15/931, G01S 17/86, G01S 17/931, G08G 1/16, B60R 11/00

(54) **A SUPPORTING DEVICE FOR INSTALLING AN ANTI-COLLISION DEVICE TO A TOWED ELEMENT**

(30) Priority: 14.11.2022 IT 202200023442
(71) Applicant: Kiwitron S.r.l., 40037 Sasso Marconi (BO) (IT)
(72) Inventor: PETRELLI, CARLO, 40010 SALA BOLOGNESE (BOLOGNA) (IT); PARAZZA, DANIELE, 41055 MONTESE (MODENA) (IT); FILIPPINI, ANDREA, 40037 SASSO MARCONI (BOLOGNA) (IT)
(74) Representative: Scipioni, Luca

(57) **Abstract**

Described is a supporting device (1) for an anti-collision device (9) which can be installed on a movement system (100) including a first transport unit (101) and a second transport unit (102) connectable or connected to each other. The supporting device (1) comprises a first unit (2), connected to the first transport unit (101) and including a receiver, and a second unit (3), connected to the second transport unit (102) and including a transmitter. The second unit (3), positioned in a removable fashion in a plurality of positions on the second transport unit (102) is configured to support at least a part of the anti-collision device 9.

## Description

This invention relates to a supporting device for an anti-collision device which can be installed on a movement system.

Moreover, the invention relates to an anti-collision system and a movement system comprising the supporting device as well as a method for supporting the anti-collision device.

Currently, there are no anti-collision devices on towed elements and those currently present are applied solely on drive means.

Disadvantageously, this lack leads to an increase in risks and a limitation as regards the movements and the ease of the manoeuvres of the trailer and consequently of the movement system.

The term "trailer" means a vehicle without a motor configured for being towed.

The trailer consequently moves in an uncontrolled manner towed by the motor means.

Disadvantageously, the trailer without an autonomous anti-collision control may collide with other foreign objects which occupy the surrounding space.

Solutions adopted for industrial trailers are not known, whilst solutions are however known which are suitable for different applications which are in no way suitable for the industrial context. For example, patent documents US2022187108, US2005024191 and US6268803B1 relate to solutions in which there are vehicles travelling long distances on roads, such as, for example, TIR or caravans. These solutions, operating with trailers having fixed lengths, are not suitable for the technical sector of industrial transport units and trailers, the lengths of which can also vary considerably. For this reason, the installation of these solutions, as well as not being flexible from the physical point of view for a fast application on different means, also appears not very reliable, because it is not possible to check a correct installation.

The technical purpose of the invention is therefore to provide a supporting device, an anti-collision system, a movement system and a method for supporting an anti-collision device which is able to overcome the drawbacks of the prior art.

The aim of the invention is therefore to provide a supporting device, an anti-collision system, a movement system and a method for supporting an anti-collision device which allow the movements of the trailer to be monitored.

A further aim of the invention is to provide a supporting device, an anti-collision system, a movement system and a method for supporting an anti-collision device which allow an improved manoeuvrability (and a greater safety) of the movement system when the motor means is attached to the trailer.

A further aim of the invention is to provide a supporting device, an anti-collision system, a movement system and a method for supporting an anti-collision device which allow a greater flexibility and reliability of installation. A further aim of the invention is to provide a supporting device, an anti-collision system, a movement system and a method for supporting an anti-collision device which makes possible the re-use of the supporting device on various movement systems.

The technical purpose indicated and the aims specified are substantially achieved by an anti-collision device which can be installed on a movement system comprising the technical features described in one or more of the appended claims. The dependent claims correspond to possible embodiments of the invention.

According to an aspect of this invention, a supporting device is provided. The supporting device is used for an anti-collision device, preferably which can be installed on a movement system including a first transport unit and a second transport unit connectable or connected to each other. The supporting device comprises a first unit. The first unit is connected to the first transport unit. The first unit includes a receiver. The first unit is preferably fixed on the first transport unit, in a predetermined position. The supporting device also comprises a second unit. The second unit is connected to the second transport unit. The second unit includes a transmitter. The second unit is configured to support at least a part of the anti-collision system. Explicit reference is made to the fact that the anti-collision system which the supporting device is intended to support is a detection device, configured for detecting data on the basis of which it is possible to avoid a collision. It should be noted, therefore, that the anti-collision system is not a bumper device or a device which dampens an impact but is aimed at avoiding it.

The second unit can be positioned in a removable fashion, on the second transport unit, in a plurality of positions. In other words, the second unit is easily removable from the second transport unit, that is to say, it may be positioned in different positions in two following installations.

This feature makes it possible to connect the supporting device to various transport units and position it on the transport units in an arbitrary position which the user decides. This gives a greater flexibility to the installation and a possibility of re-use of the supporting device on various movement systems. Moreover, the second transport unit is usually not owned by the person driving the first transport unit, so it is necessary that the anti-collision device is positioned and then removed quickly. On the other hand, the prior art referred to above relates primarily to solutions wherein, potentially, the second unit can also be kept on the second transport unit because there is no frequent variation of the latter.

According to a possible embodiment, the first unit is programmed to send a distance signal to the second unit. The distance signal represents an installation distance between the first and the second unit. The first unit comprises a control unit. The control unit is programmed to receive the distance signal.

The control unit is programmed for deriving, on the basis of the distance signal, the installation distance.

The control unit is programmed for comparing the installation distance with a range of reference installation distances.

The control unit is programmed for notifying a user or disabling the movement of the first transport unit, for values of the installation distance outside the reference installation range.

This feature allows the correct installation of the supporting device and the signal and/or block the movement in order to work safely.

None of the above-mentioned documents describes this solution since it is not a problem felt in the slightest by these devices which are used for solutions having fixed lengths.

In other words, the reliability of the supporting device and, consequently, of the movement system on which it is installed, is increased.

According to a possible embodiment, the supporting device comprises an archive. An archive, including a range of installation distances for each type of second transport unit. The supporting device also comprises a user interface. The user interface is configured for receiving setting data. The setting data represents a type of second transport unit.

The control unit is programmed to define the range of reference installation distances on the basis of the setting data received from the user interface. This feature makes it possible to enter specific data depending on the type of second transport unit used.

In other words, it is possible to adapt the supporting device to different second transport units in a reliable and customised manner.

According to a possible embodiment, the first unit includes a first transceiver. The second unit includes a second transceiver. The control unit is programmed to determine the installation distance starting from a flight time.

This feature allows the installation distance value to be acquired by measuring the time taken by the signal to travel the distance between the first and the second unit.

The signal starts from the first transceiver and reaches the second transceiver, which returns the signal to the first transceiver.

According to a possible embodiment, the first unit comprises a housing. The housing is configured to receive the second unit. The second unit is movable between two configurations. A rest configuration, in which the second unit is positioned in the housing of the first unit. An operating configuration, wherein the second unit is spaced from the housing of the first unit.

This feature allows the second unit to be placed in the housing of the first unit when it is not on the second transport unit.

In other words, it is ensured that the second unit is correctly placed with the remaining part of the supporting device when it is not in use.

This allows parts of the supporting device not to be lost or left unattended. In this way the supporting device is always available and ready to be reused if necessary.

According to a possible embodiment, the supporting device comprises a connection sensor. The connection sensor is configured for detecting a connection signal. The connection signal represents a connection or an absence of connection between the first transport unit and the second transport unit. The connection signal is variable between a connected value and a disconnected value. The connected value represents a connection between the first and the second transport unit. The disconnected value represents an absence of connection between the first and the second transport unit.

This feature makes it possible to have a reliable control on the movement system.

The connection sensor therefore facilitates a control which is necessary every time a manoeuvre is to be started.

Without this sensor it would be necessary for a user to intervene who physically checks and remembers personally to check the connection status of the transport units.

According to a possible embodiment, the first unit comprises a presence sensor. The presence sensor is configured for detecting a presence signal. The presence signal represents a presence of the second unit in the housing of the first unit. The presence signal is variable between a positive value and a negative value. The positive value represents a presence of the second unit in the housing of the first unit. The negative value represents an absence of the second unit in the housing of the first unit.

This feature makes it possible to have reliable control on the supporting device.

The presence sensor therefore facilitates a control which is necessary every time a manoeuvre is to be started.

Without this sensor it would be necessary for a user to intervene who physically checks and remembers personally to check in which configuration the transport units are.

According to a possible embodiment, the control unit is programmed to notify a problem with a disconnected value of the connection signal and with a negative value of the presence signal.

Preferably, the control unit is programmed for disabling a movement of the first transport unit with a disconnected value of the connection signal and with a negative value of the presence signal.

Even more preferably, the control unit is programmed for notifying and disabling a movement of the first transport unit with a disconnected value of the connection signal and with a negative value of the presence signal.

The control unit may also be programmed for notifying a problem with a connected value of the connection signal and for the value of the installation distance outside the reference installation range.

Preferably, the control unit is programmed for disabling a movement of the first transport unit with a connected value of the connection signal and for the value of the installation distance outside the reference installation range.

Even more preferably, the control unit is programmed for notifying and disabling a movement of the first transport unit with a connected value of the connection signal and for the value of the installation distance outside the reference installation range.

This feature makes it possible to simultaneously check both the status of the movement system and the status of the supporting device.

In other words, the connection value between the first and the second transport unit, and the configuration of the second unit, is checked simultaneously and reliably.

This allows the safe movement of the first transport unit only when it is disconnected from the second transport unit and the second unit is in the rest configuration.

Alternatively, if the first transport unit is connected to the second transport unit, it is ensured that the supporting device is ready for use and, therefore, the second unit is in the operating configuration.

This feature considerably increases the safety, anticipating any risk, raising an alarm or blocking any incorrect operation.

According to a possible embodiment, the first unit is connected in a predetermined position on the first transport unit.

This feature makes it possible to have flexibility on the positioning of the first unit depending on the use of the supporting device.

According to a possible embodiment, the second unit is configured for connecting to the second transport unit by means of a magnetic force. The first unit is configured for communicating with the second unit using an ultra-wideband wireless connection, UWB.

This technical feature makes it possible to have a solid but not fixed connection between the second unit and the second transport unit.

Preferably, the first unit is connected to the second unit without using cables and/or further mechanical elements which could obstruct the manoeuvres or slow down the installation procedure.

According to an aspect of the invention, an anti-collision system for a movement system is also provided.

The movement system includes a first transport unit and a second transport unit. The first and the second transport unit are connectable or connected to each other.

The anti-collision system includes at least one anti-collision device. The anti-collision device is configured to prevent a collision of the movement system.

The anti-collision system also includes a supporting device.

The supporting device is configured to support on the second transport unit at least a part of the anti-collision device.

This technical feature makes it possible to avoid possible collisions inside and outside the movement system.

According to an aspect of the invention, the invention also provides a movement system comprising at least a first transport unit, a second transport unit and an anti-collision system.

According to a possible embodiment, the first transport unit is drive means and the second transport unit is a trailer.

The technical purpose indicated and the aims specified are also achieved by a method for supporting an anti-collision device. The anti-collision device can be installed on a movement system. The method comprises the step of preparing a supporting device as described below. The method comprises the step of connecting between a first unit and the first transport unit. The method comprises the step of connecting between a second unit and the second transport unit.

The method comprises the step of connecting the anti-collision device, at least partly, on the second unit.

The second unit is arbitrarily positioned on a rear wall of the second transport unit.

The second unit is positioned in a removable fashion on a rear wall of the second transport unit.

The second unit is positioned arbitrarily and in a removable fashion on a rear wall of the second transport unit.

The method therefore provides a simplified installation of the anti-collision device which comprises a reduced number of steps which are easy to perform. The installation is thus intuitive and immediate.

Further features and advantages of this invention are more apparent in the non-limiting description below, with reference to an embodiment of a supporting device, an anti-collision system, a movement system and a method for supporting an anti-collision device. The description is set out below with reference to the accompanying drawings which are provided solely for purposes of illustration without restricting the scope of the invention and in which:

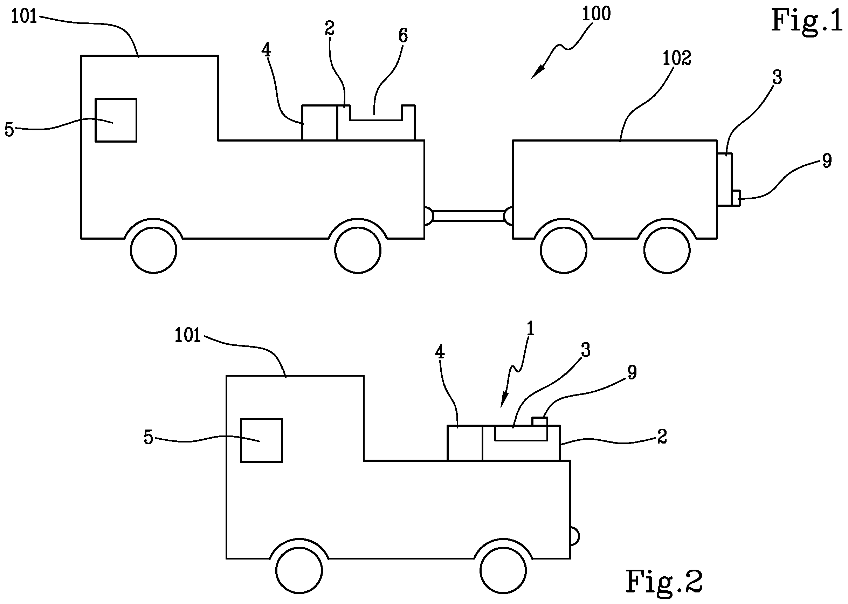

- Figure 1 is a schematic view of the movement system according to the invention wherein the supporting device is in an operating configuration;
- Figure 2 is a schematic view of the movement system according to the invention wherein the supporting device is in a rest configuration.

With reference to the accompanying drawings, the numeral 1 denotes in its entirety a support for an anti-collision device 9 which can be installed on a movement system 100 which, for simplicity of description, will hereafter be referred to as supporting device 1.

The supporting device 1 is used for an anti-collision device 9 which can be installed on a movement system 100 including a first transport unit 101 and a second transport unit 102 connectable or connected to each other. The supporting device 1 comprises a first unit 2 connected to the first transport unit 101 and including a receiver.

According to another possible embodiment, the first unit 2 could include a transmitter.

The supporting device 1 also comprises a second unit 3. The second unit 3 is connected to the second transport unit 102 and includes a transmitter. According to another possible embodiment, the second unit 3 could include a receiver.

The second unit 3 is configured to support at least a part of the anti-collision system.

Advantageously, it is possible to monitor the movement of the second transport unit 102 which is usually that without the motor and therefore follows in a dependent manner the path of the first transport unit 101.

In other words, since the user cannot intervene directly on the operating space of the second transport unit 102 it is good that the movement is controlled in order to avoid collisions with external objects.

Preferably, the first unit 2 is connected in a predetermined position on the first transport unit 101.

Preferably, the second unit 3 can be positioned in a removable fashion, on the second transport unit 102, in a plurality of positions.

The second unit 3 is positioned or can be positioned on the second transport unit 102 in a reversible manner with various types of connection. Preferably, the second unit 3 is configured to connect to the second transport unit 102 by a magnetic force, thanks to the use of a magnet.

In addition or alternatively, the second unit 3 is configured to connect to the second transport unit 102 by adhesive force.

In addition or alternatively, the second unit 3 is configured to connect to the second transport unit 102 by mechanical force, for example by snap fitting.

Other connecting means are contemplated providing they are removable (that is to say, which can be freely positioned on the trailer/second transport unit).

Advantageously, these techniques allow a solid but not fixed connection between the second unit 3 and the second transport unit 102 thus improving the versatility of installation.

Advantageously, the second unit 3 is easily removable from the second transport unit 102 and can be reinstalled on a hypothetical other second transport unit 102 or on the same second transport unit 102 when necessary.

In other words, it is possible to connect the supporting device 1 to various transport units and position it on the transport units in an arbitrary position which the user decides. This gives a greater flexibility to the installation and a possibility of re-use of the supporting device 1 on various movement systems.

The first unit 2 is programmed to send a distance signal to the second unit 3 representing an installation distance between the first unit 2 and the second unit 3.

In other words, once the first unit 2 and the second unit 3 have been installed, respectively, on the first transport unit 101 and the second transport unit 102, it will be possible to monitor the correct installation and its correct distance.

There may be multiple modes of transmitting the signal depending 3 on the use of the movement system 100. For example, wired transmissions which are in turn divided into electrical transmissions and optical transmissions.

Alternatively, the modes of transmitting the signal may comprise wireless modes of transmission of the signal, which are in turn divided into optical and radio communication modes.

Preferably, the first unit 2 is configured for communicating with the second unit 3 by means of an ultra-wideband wireless connection, UWB.

Advantageously, the first unit 2 is connected to the second unit 3 without using cables and/or further mechanical elements which could obstruct the manoeuvres or slow down the installation procedure.

Preferably, the first unit 2 also comprises a control unit 4 programmed to receive the distance signal.

The control unit 4 derives, on the basis of the distance signal, the installation distance of the supporting device 1.

The control unit 4 is also is programmed for comparing the installation distance with a range of reference installation distances.

The cross control between the installation distance and the reference distance makes it possible to obtain a greater reliability of the supporting device 1.

Preferably, for values of the installation distance outside the reference installation range, the control unit 4 is programmed for notifying a user and/or disabling the movement of the first transport unit 101.

Preferably, the notification may be of the audio and/or visual type.

Advantageously, this notification and/or disabling of the movement of the first transport unit 101 guarantees that it works safely.

In other words, the reliability of the supporting device 1 and consequently of the movement system 100 on which it is installed is increased since the user is warned in time if there are non-compliant installation distances.

The supporting device 1 also comprises an archive which includes a range of installation distances for each type of second transport unit 102.

Each type of second transport unit 102 can correspond to different reference dimensional measurements such as length, height and/or width of the second transport unit 102.

Advantageously, having standard dimensional data in memory for each second transport unit 102 it is not necessary to personally measure the transport units before each start of the manoeuvre and/or having to manually enter the structural dimensions of the transport units.

Preferably, the supporting device 1 also comprises a user interface 5. The user interface 5 is configured for receiving setting data, representing a type of second transport unit 102.

The control unit 4 is programmed to define the range of reference installation distances on the basis of the setting data received from the user interface 5.

Advantageously, the user interface 5 allows specific data to be entered directly depending on the type of second transport unit 102 used.

In other words, it is possible to adapt the supporting device 1 to different second transport units in a reliable and customised manner.

In this way it is possible to install the supporting device 1 on any movement system 100 already existing.

Preferably, when the control unit 4 defines the range of installation distances it also considers possible tolerances of the movement system 100.

For example, during a manoeuvre which comprises a non-rectilinear movement of the movement system 100 it is possible that the first transport unit 101 and the second transport unit 102 move towards each other, and consequently also the first unit 2 and the second unit 3.

The distance set at the start of the manoeuvre between the two units will therefore be different and dependent on the angle of rotation of the transport units.

In other words, assuming a joint between the first transport unit 101 and the second transport unit 102, when the first transport unit 101 rotates, the second transport unit 102 will move towards the first transport unit 101 trying to follow the movement. In the case of a possible continuous control by the supporting device 1 an error would be obtained in the case of an excessive movement of the second transport unit 102 towards the first transport unit 101.

It is therefore necessary to introduce a range of values which guarantees that it covers the tolerances deriving from a possible angle of rotation or steering angle.

Advantageously, by introducing a range of values which comprises possible tolerances, the error, resulting from a certain offset from the conditions of the movement system 100 during the manoeuvre, is silenced, without interrupting or blocking the movement system 100.

Preferably, the first unit 2 includes a transceiver.

Preferably, the second unit 3 includes a transceiver.

Still more preferably, both the first unit 2 and the second unit 3 include transceivers.

Advantageously, the first unit 2 and the second unit 3 operate both as signal transmitters and receivers.

Preferably, the control unit 4 is programmed to determine the installation distance starting from a flight time resulting from the exchange of signal between the two transceivers.

Advantageously, the control unit 4 allows the installation distance value to be acquired by measuring the time taken by the signal to travel the distance between the first unit 2 and the second unit 3.

The signal starts from the first transceiver and reaches the second transceiver, which returns the signal to the first transceiver.

Preferably, the first unit 2 comprises a housing 6 for receiving the second unit 3. The second unit 3 is movable between two configurations depending on its interaction with the above-mentioned housing 6.

A rest configuration, in which the second unit 3 is positioned in the housing 6 of the first unit 2, and an operating configuration, wherein the second unit 3 is spaced from the housing 6 of the first unit 2.

Advantageously, it is possible to position the second unit 3 in the housing 6 of the first unit 2 when it is not on the second transport unit 102.

In other words, it is ensured that the second unit 3 is correctly placed with the remaining part of the supporting device 1 when it is not in use.

This allows parts of the supporting device 1 not to be lost or left unattended.

In this way, the supporting device 1 is always available and ready to be reused if necessary.

Preferably, the housing 6 of the first unit 2 is a recharging station for the second unit 3.

Advantageously, the recharging station simultaneously allows the second unit 3 to be stored and recharged whilst it is not in use.

The supporting device 1 may also comprise a connection sensor 7. The connection sensor 7 is configured for detecting a connection signal. The connection signal represents a connection or an absence of connection between the first transport unit 101 and the second transport unit 102. The connection signal is variable between a connected value and a disconnected value. The connected value represents a connection between the first transport unit 101 and the second transport unit 102. The disconnected value represents an absence of connection between the first transport unit 101 and the second transport unit 102.

Advantageously, the connection value makes it possible to have a reliable control on the movement system 100.

The connection sensor 7 therefore facilitates a control which is necessary every time a manoeuvre is to be started.

Without this sensor it would be necessary for a user to intervene who physically checks and remembers personally to check the connection status of the transport units.

Preferably, the first unit 2 comprises a presence sensor 8. The presence sensor 8 is configured for detecting a presence signal. The presence signal represents a presence of the second unit 3 in the housing 6 of the first unit 2. The presence signal is variable between a positive value and a negative value. The positive value represents a presence of the second unit 3 in the housing 6 of the first unit 2.

Moreover, the positive value, if the housing 6 is a recharging station, represents a recharging of the second unit 3. The negative value represents an absence of the second unit 3 in the housing 6 of the first unit 2.

Advantageously, the presence value makes it possible to obtain a reliable control on the supporting device 1.

The presence sensor 8 therefore facilitates a control which is necessary every time a manoeuvre is to be started.

Without this sensor it would be necessary for a user to intervene who physically checks and remembers personally to check in which configuration the transport units 3 are.

Preferably, the control unit 4 is programmed for notifying and/or disabling a movement of the first transport unit 101 with a disconnected value of the connection signal and with a negative value of the presence signal.

Preferably, the control unit 4 is programmed for notifying and/or disabling a movement of the first transport unit 101 with a connected value of the connection signal and for the value of the installation distance outside the reference installation range.

Advantageously, the control unit 4 makes it possible to simultaneously check both the status of the movement system 100 and the status of the supporting device 1.

In other words, the connection value between the first transport unit 101 and the second transport unit 102, and the configuration of the second unit 3, is checked simultaneously and reliably.

This allows the safe movement of the first transport unit 101 only when it is disconnected from the second transport unit 102 and the second unit 3 is in the rest configuration.

Alternatively, if the first transport unit 101 is connected to the second transport unit 102, it is ensured that the supporting device 1 is ready for use and, therefore, the second unit 3 is in the operating configuration.

This feature considerably increases the safety, anticipating any risk, raising an alarm or blocking any incorrect operation.

This invention also provides an anti-collision system for a movement system 100.

The movement system 100 including a first transport unit 101 and a second transport unit 102 connectable or connected to each other.

The anti-collision device includes at least one an anti-collision device 9, configured to prevent a collision of the movement system 100.

The anti-collision system also includes a supporting device 1 configured to support on the second transport unit 102 at least a part of the anti-collision device 9.

Advantageously, the system makes it possible to avoid possible collisions inside and outside the movement system 100.

Preferably, the anti-collision system also comprises an ultra-wideband directional antenna configured for sending information relative to an angular position of the supporting devices 1.

In other words, thanks to the knowledge of the angular position of the supporting devices 1 it is possible to obtain the direction of the second transport unit 102.

Advantageously, by using the direction and distance information of the second transport unit 102 it is possible to identify a spot position.

This invention also provides a movement system 100 comprising at least a first transport unit 101, a second transport unit 102 and an anti-collision system.

According to a possible embodiment, the first transport unit 101 is drive means. The second transport unit 102 is a trailer.

Preferably, the anti-collision systems may also be installed on two or more second transport units spaced from each other by a known distance. Advantageously, the installation of several anti-collision systems makes it possible to check that the transport units are correctly spaced and therefore the anti-collision systems are correctly installed.

In other words, it is possible to install in a removable fashion the anti-collision system on transport units spaced from each other by a known distance, in order to check that the distance remains unchanged between the various transport units during the movement.

Preferably, the second unit 3 can also be installed laterally and not only behind the second transport unit 102.

Lastly, this invention also provides a method for supporting an anti-collision device 9. The anti-collision device 9 can be installed on a movement system 100. The method comprises the step of preparing a supporting device 1 as described below.

The first step comprises the connection between the first unit 2 and the first transport unit 101. Subsequently, the step of connecting between the second unit 3 and the second transport unit 102 is performed.

The second step comprises the connection of the anti-collision device 9, at least partly, on the second unit 3.

The third step comprises the positioning of the second unit 3 in an arbitrary fashion on a wall of the second transport unit 102.

Preferably, the positioning of the second unit 3 in an arbitrary fashion on a rear wall of the second transport unit 102.

Preferably, the second unit 3 is positioned in a removable fashion on the wall of the second transport unit 102.

Advantageously, the installation method comprises a reduced number of steps which are easy to perform. The installation is thus intuitive and immediate.

## Claims

1. A supporting device (1) for an anti-collision device which can be installed on a movement system (100) including a first transport unit (101) and a second transport unit (102) connectable or connected to each other, the supporting device (1) being **characterised in that** it comprises:
- a first unit (2), connected to the first transport unit (101) and including a receiver;
- a second unit (3), connected to the second transport unit (102) and including a transmitter,
wherein the second unit (3) is configured to support at least a part of the anti-collision device (9) and wherein the second unit (3) can be positioned in a removable fashion, on the second transport unit (102), in a plurality of positions.

2. The supporting device (1) according to claim 1, wherein the first unit (2) is programmed to send a distance signal to the second unit (3), said distance signal representing an installation distance between the first unit (2) and the second unit (3), wherein the first unit (2) comprises a control unit (4), programmed for:
- receiving the distance signal and deriving, on the basis of the distance signal, the installation distance;
- comparing the installation distance with a range of reference installation distances;
- notifying a user or disabling the movement of the first transport unit (101), for values of the installation distance outside the reference installation range.

3. The supporting device (1) according to claim 2, wherein the supporting device (1) comprises:
an archive, including a range of installation distances for each type of second transport unit (102), and
a user interface (5), configured for receiving setting data, representing a type of second transport unit (102),
and wherein the control unit (4) is programmed to define the range of reference installation distances on the basis of the setting data received from the user interface (5).

4. The supporting device (1) according to claim 3, wherein the first unit (2) includes a first transceiver, the second unit (3) includes a second transceiver and said control unit (4) is programmed to determine the installation distance starting from a flight time.

5. The supporting device (1) according to any one of claims 2 to 4, wherein said first unit (2) comprises a housing (6), configured to receive the second unit (3), and wherein said second unit (3) is movable between a rest configuration, in which it is positioned in the housing (6) of the first unit (2), and a working configuration, wherein it is spaced from the housing (6) of the first unit (2).

6. The supporting device (1) according to claim 5, comprising a connection sensor (7), configured for detecting a connection signal, representing a connection or absence of connection between the first transport unit (101) and the second transport unit (102), wherein the connection signal is variable between a connected value, representing a connection between the first transport unit (101) and the second transport unit (102), and a disconnected value, representing an absence of connection between the first transport unit (101) and the second transport unit (102).

7. The supporting device (1) according to claim 6, wherein the first unit (2) comprises a presence sensor (8), configured for detecting a presence signal, representing a presence signal, representing a presence of the second unit (3) in the housing (6) of the first unit (2), wherein the presence signal is variable between a positive value, representing a presence of the second unit (3) in the housing (6) of the first unit (2), and a negative value, representing an absence of the second unit (3) in the housing (6) of the first unit (2).

8. The supporting device (1) according to claim 7, wherein the control unit (4) is programmed for:
- notifying a problem and/or disabling a movement of the first transport unit (101) with disconnected value of the connection signal and with negative value of the presence signal; and/or
- notifying a problem and/or disabling a movement of the first transport unit (101) with connected value of the connection signal and for the value of the installation distance outside the reference installation range.

9. The supporting device (1) according to any one of the preceding claims, wherein the first unit (2) is connected in a predetermined position on said first transport unit (101).

10. The supporting device (1) according to any one of the preceding claims, wherein the second unit (3) is configured to connect to the second transport unit (102) by means of a magnetic force and the first unit (2) is configured for communicating with said second unit (3) by means of a wireless connection in ultra-wide band, UWB.

11. An anti-collision system for a movement system (100) including a first transport unit (101) and a second transport unit (102) connectable or connected to each other, including:
- an anti-collision device (9), configured to prevent a collision of the movement system (100);
- a supporting device (1) according to any one of the preceding claims, wherein the supporting device (1) is configured to support on the second transport unit (102) at least a part of the anti-collision device (9).

12. A movement system (100), comprising:
- a first transport unit (101);
- a second transport unit (102);
- at least one anti-collision system according to claim 11.

13. The movement system (100) according to claim 12, wherein the first transport unit (101) is a drive unit and the second transport unit (102) is a trailer.

14. A method for supporting an anti-collision device (9) which can be installed on a movement system (100) including a first transport unit (101) and a second transport unit (102) connectable to each other, the method comprising the following steps:
- preparing a supporting device (1), including a first unit (2) and a second unit (3), connected to the first transport unit (101) and including a receiver, and a second unit (3), connected to the second transport unit (102) and including a transmitter;
- connecting the first unit (2) to the first transport unit (101);
- connecting the second unit (3) to the second transport unit (102);
- connecting the anti-collision device (9), at least partly, to the second unit (3);
wherein, during the step of connecting the second unit (3) to the second transport unit (102), the second unit (3) is positioned in an arbitrary and removable fashion on a rear wall of the second transport unit (102).
